# EUROPEAN PATENT APPLICATION

(11) **EP 4 745 928 A1**
(43) Date of publication of application: **20.05.2026**
(21) Application number: 24859438.4
(22) Date of filing: 09.08.2024
(51) Int. Cl.: G07G 1/00, G06Q 30/06, G07G 1/01, G08B 13/22

(54) **CHECKOUT SYSTEM**

(30) Priority: 25.08.2023 JP 2023137409
(71) Applicant: Toshiba TEC Kabushiki Kaisha, Tokyo 141-8562 (JP)
(72) Inventor: KATSUMATA, Hiroyuki, Izunokuni-shi, Shizuoka 410-2392 (JP)
(74) Representative: Bandpay & Greuter
(86) International application number: PCT/JP2024/028814
(87) International publication number: WO 2025/047401

(57) **Abstract**

It is possible to easily monitor whether a customer exiting a store has completed settlement. A checkout system according to an embodiment includes a settlement unit, an operation unit, and a first control unit. The settlement unit settles a payment for a transaction in a store. The operation unit is provided facing a checkout lane of the store and performs a notification operation to make a person in a vicinity aware that a customer is permitted to exit the store via the checkout lane. The first control unit controls the operation unit to perform the notification operation in a predetermined first permission time period after completion of settlement by the settlement unit.

## Description

### FIELD

Embodiments described herein relate generally to a checkout system.

### BACKGROUND

In a store where a customer is permitted to exit after completion of settlement for a transaction such as commodity sales, it is desired to be able to easily monitor whether the customer exiting the store has completed settlement.

### CITATION LIST

### PATENT LITERATURE

Patent Literature 1: Jpn. Pat. Appln. KOKAI Publication No. 2022-49680

### SUMMARY

### TECHNICAL PROBLEM

An object of the present invention is to provide a checkout system that enables easy monitoring of whether a customer exiting a store has completed settlement.

### BRIEF DESCRIPTION OF THE DRAWINGS

FIG. 1 is an overall configuration diagram of a commodity sales system according to an embodiment.
FIG. 2 is a schematic diagram showing an example of a layout of a checkout corner of a store in which the commodity sales system is introduced.
FIG. 3 is a block diagram showing a circuit configuration of a main part of a transaction processing apparatus in FIG. 1.
FIG. 4 is a block diagram showing a circuit configuration of a main part of a POS terminal in FIG. 1.
FIG. 5 is a block diagram showing a circuit configuration of a main part of a checkout gate.
FIG. 6 is a perspective view showing an appearance of the checkout gate in FIG. 1.
FIG. 7 is a block diagram showing a circuit configuration of a main part of an information processing terminal in FIG. 1.
FIG. 8 is a block diagram showing a circuit configuration of a main part of a monitoring terminal in FIG. 1.
FIG. 9 is a block diagram showing a circuit configuration of a main part of a POS server in FIG. 1.
FIG. 10 is a sequence diagram showing a rough procedure from registration of content of a transaction using the information processing terminal to handover of checkout for the registered transaction to the checkout gate.
FIG. 11 is a flowchart of checkout processing.
FIG. 12 is a diagram showing an example of a first guide screen.
FIG. 13 is a diagram showing an example of a second guide screen.
FIG. 14 is a sequence diagram showing an interaction between the checkout gate and the POS server regarding invalidation of a settlement completion code.
FIG. 15 is a sequence diagram showing an interaction between the checkout gate and the POS server for confirming if the settlement completion code is invalid.
FIG. 16 is a flowchart of erroneous passage processing by a processor of the checkout gate and alert processing by a processor of the monitoring terminal.
FIG. 17 is a diagram showing an example of a first warning screen.
FIG. 18 is a diagram showing an example of a second warning screen.

### DETAILED DESCRIPTION

A checkout system according to an embodiment includes a settlement unit, an operation unit, and a first control unit. The settlement unit settles a payment for a transaction in a store. The operation unit is provided facing a checkout lane of the store and performs a notification operation to make a person in a vicinity aware that a customer is permitted to exit the store via the checkout lane. The first control unit controls the operation unit to perform the notification operation in a predetermined first permission time period after completion of the settlement by the settlement unit.

Hereinafter, a commodity sales system that performs processing for commodity sales to customers in a store will be described with reference to the drawings. The commodity sales system is also an example of a transaction processing system that processes commodity sales as a target transaction. The transaction to be processed may be a transaction of a type different from the commodity sales, such as provision of a service in the store. However, it is assumed that the customer is permitted to exit the store after completion of the settlement for the transaction to be processed.

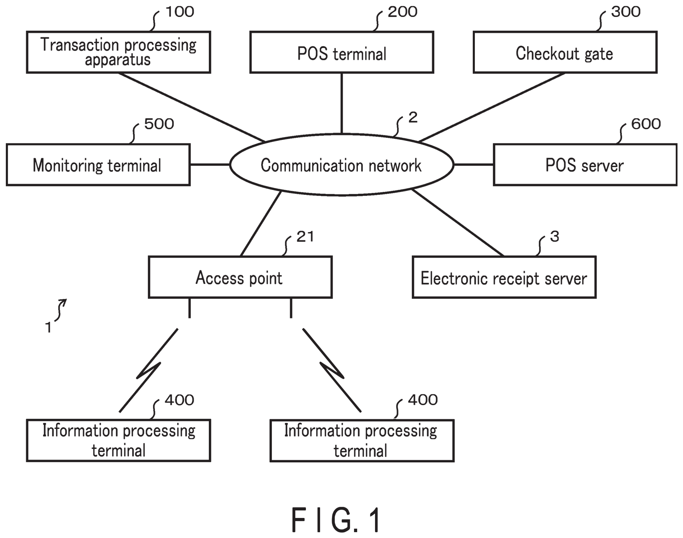

FIG. 1 is an overall configuration diagram of a commodity sales system 1 according to the present embodiment.

The commodity sales system 1 includes a transaction processing apparatus 100, a point-of-sale (POS) terminal 200, a checkout gate 300, an information processing terminal 400, a monitoring terminal 500, and a POS server 600. The commodity sales system 1 is configured to be able to communicate with the transaction processing apparatus 100, the POS terminal 200, the checkout gate 300, the information processing terminal 400, the monitoring terminal 500, and the POS server 600, via a communication network 2. The POS terminal 200 and the checkout gate 300 can communicate with an electronic receipt server 3 via the communication network 2. The electronic receipt server 3 provides an electronic receipt service that enables an electronic receipt screen showing a content of a transaction processed by the commodity sales system 1 to be viewed on any information terminal.

In FIG. 1, one POS terminal 200, one checkout gate 300, one monitoring terminal 500, and one POS server 600 are illustrated, and two information processing terminals 400 are illustrated, but the numbers of them are individually arbitrary. In many cases, a plurality of POS terminals 200 and a plurality of checkout gates 300 are included in the commodity sales system 1. The POS terminal 200 and the monitoring terminal 500 are not necessarily provided. In many cases, a large number of information processing terminals 400 are included in the commodity sales system 1.

For the communication network 2, the Internet, a virtual private network (VPN), a local area network (LAN), a public communication network, a mobile communication network, and the like may be used singly or in combination as appropriate. As the communication network 2, for example, a LAN, the Internet, and a mobile communication network are used in combination. For example, a LAN is used for communication among the transaction processing apparatus 100, the POS terminal 200, the checkout gate 300, the information processing terminal 400, the monitoring terminal 500, and the POS server 600. For example, a LAN is used for communication between the transaction processing apparatus 100 and the information processing terminal 400. However, the information processing terminal 400 is connected to the communication network 2 by wireless access via an access point 21 included in the communication network 2. For example, a LAN and the Internet are used for communication between the POS terminal 200 or the checkout gate 300 and the electronic receipt server 3.

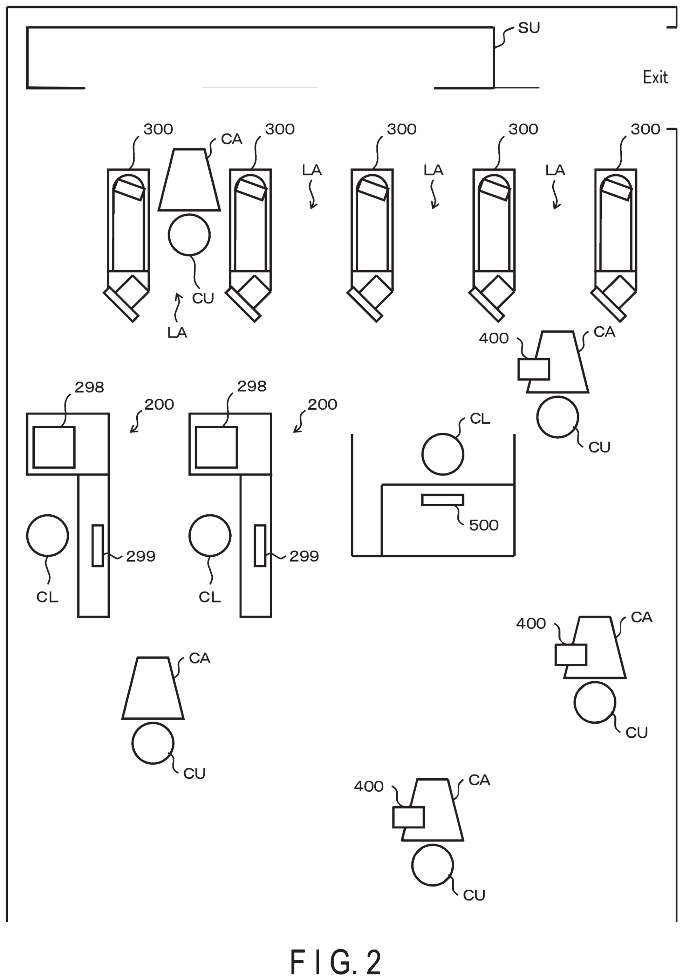

FIG. 2 is a schematic diagram showing an example of a layout of a checkout corner of a store in which the commodity sales system 1 is introduced.

A customer CU shopping in the store temporarily becomes an operator of the information processing terminal 400. The information processing terminal 400 is attached to, for example, a shopping cart (hereinafter simply referred to as a cart) CA. The information processing terminal 400 may be carried by the customer CU. As the information processing terminal 400, for example, an existing portable information processing apparatus such as a tablet computer, a smartphone, or a smartwatch can be used. The information processing terminal 400 may be provided in the store and temporarily used by the customer CU, or may be owned by the customer CU. The customer CU goes around the sales floor while pushing the cart CA, and directly places a commodity to be purchased on the cart CA or puts the commodity into a basket placed on the cart CA. At this time, the customer CU operates the information processing terminal 400 to perform an operation for registering the commodity placed on the cart CA as a transaction commodity. The transaction processing apparatus 100 registers the transaction commodity according to the operation in information processing terminal 400. Upon selecting all commodities to be purchased, the customer CU goes to the checkout corner and performs checkout using the checkout gate 300. Thereafter, the customer CU passes through a checkout lane LA facing the checkout gate 300 used for the checkout, and then exits the store. In a case where a plurality of checkout gates 300 are installed as illustrated in FIG. 2, these plurality of checkout gates 300 are installed in a state of facing a plurality of checkout lanes LA, respectively. The checkout gate 300 has an exit gate function as well for controlling the passage of the customer CU in the checkout lane LA facing the checkout gate 300. The exit gate function will be described later. After passing through the checkout lane LA, the customer CU places the commodity into a bag at a packing table SU as necessary.

Furthermore, the customer CU can bring a commodity to be purchased to a manned lane without using the information processing terminal 400 to have a store clerk CL register the commodity as a transaction commodity. The store clerk CL operates the POS terminal 200 to register the commodity brought by the customer CU as a transaction commodity and performs checkout of the payment amount. The operation of the POS terminal 200 may be similar to that of an existing POS terminal of the same type. In FIG. 2, the POS terminal 200 is an example of a separate type in which the POS terminal 200 is separated into a main body unit 298 and a scanner unit 299. The POS terminal 200 may be of another structural form such as an integrated type. The POS terminal 200 may be a semi-self-type terminal configured by a registration terminal operated by the store clerk CL and a checkout terminal operated by the customer CU. The customer CU who has finished the checkout at the POS terminal 200 passes through the checkout lane LA and then exits the store. Thus, the checkout gate 300 performs processing for checkout from the store of the customer CU, and is an example of a checkout system.

The monitoring terminal 500 supports the store clerk CL who monitors for a fraudulent passage through the checkout lane LA. The POS server 600 manages transactions processed by the commodity sales system 1.

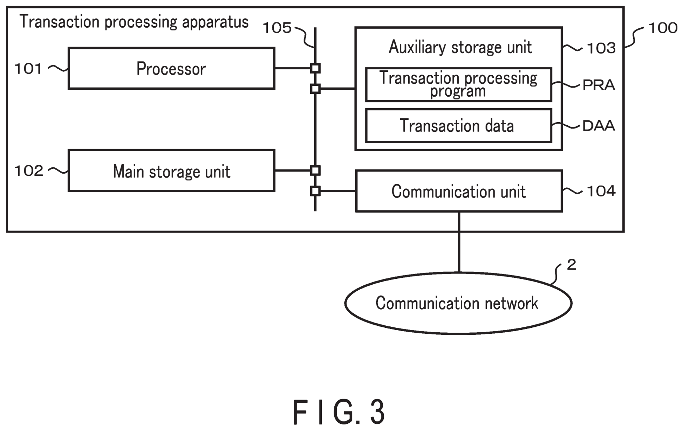

FIG. 3 is a block diagram showing a circuit configuration of a main part of the transaction processing apparatus 100.

The transaction processing apparatus 100 includes a processor 101, a main storage unit 102, an auxiliary storage unit 103, a communication unit 104, a bus 105, and the like. The processor 101, the main storage unit 102, the auxiliary storage unit 103, and the communication unit 104 are capable of communicating with each other via a bus 105.

The processor 101, the main storage unit 102, and the auxiliary storage unit 103 are connected to each other through the bus 105, thereby configuring a computer performing information processing for controlling the transaction processing apparatus 100.

The processor 101 serves as the center of the computer. The processor 101 executes information processing to control each unit in order to realize various functions as the transaction processing apparatus 100 in accordance with an information processing program such as an operating system or an application program. The processor 101 may be, for example, a processing circuit such as a central processing unit (CPU), a graphics processing unit (GPU), an application specific integrated circuit (ASIC), or a programmable logic device (e.g., a simple programmable logic device (SPLD), a complex programmable logic device (CPLD), or a field programmable gate array (FPGA)). The processor 101 is not limited to the configuration of a single processing circuit, and the processor 101 may be configured by combining multiple processing circuits. The same applies to other processors according to the present embodiment.

The main storage unit 102 corresponds to a main storage of the computer. The main storage unit 102 includes a volatile memory (random access memory) and a nonvolatile memory (read-only memory, non-volatile random access memory). The main storage unit 102 stores information processing programs and data necessary for information processing. The processor 101 realizes a predetermined function by reading and executing a program stored in the main storage unit 102. Instead of storing the program in the main storage unit 102, the program may be directly incorporated into the processor 101. In this case, the processor 101 realizes a predetermined function by reading and executing the program incorporated therein. In addition, a predetermined function may be realized not only by the processor 101 executing the program, but also by a combination of logic circuits. The same applies to the other main storage units according to the present embodiment.

The auxiliary storage unit 103 corresponds to an auxiliary storage of the computer. As the auxiliary storage unit 103, an electrically erasable programmable read-only memory (EEPROM), a hard disc drive (HDD), a solid-state drive (SSD), or other well-known storage devices can be used. The auxiliary storage unit 103 stores data used by the processor 101 to perform various types of processing and data generated through the processing by the processor 101. The auxiliary storage unit 103 may store the aforementioned information processing programs. In the present embodiment, the auxiliary storage unit 103 stores a transaction processing program PRA, which is one of the information processing programs. The transaction processing program PRA is an application program in which a procedure of transaction processing described later is described. A part of the storage area of the auxiliary storage unit 103 is used as an area for storing transaction data DAA. The transaction data DAA is data representing the content of one transaction.

The communication unit 104 executes communication processing for data communications via the communication network 2. For the communication unit 104, for example, an existing wired communication device for the Internet may be adopted. Note that, for the communication unit 104, a wireless communication device connected to the communication network 2 by wireless communication may be used instead of or in addition to the wired communication device.

The bus 105 includes an address bus, a data bus, a control signal line, and the like, through which data and control signals that are to be exchanged between the connected units are transmitted.

For the basic hardware of the transaction processing apparatus 100, a general-purpose server device may be adopted. In general, the provision of the transaction processing apparatus 100 may be realized in a state where the transaction processing program PRA is stored in the auxiliary storage unit 103. However, the hardware in a state where the transaction processing program PRA is not stored in the auxiliary storage unit 103 or in a state where an application program of another version of the same type is stored in the auxiliary storage unit 103 and the transaction processing program PRA may be individually provided. The transaction processing apparatus 100 may be configured by writing the transaction processing program PRA into the auxiliary storage unit 103 in response to a manipulation by an operator. The provision of the transaction processing program PRA can be realized by recording it in a removable storage medium such as a magnetic disk, a magneto-optical disk, an optical disk, or a semiconductor memory, or through communication via a network. The transaction processing program PRA may be stored in the main storage unit 102.

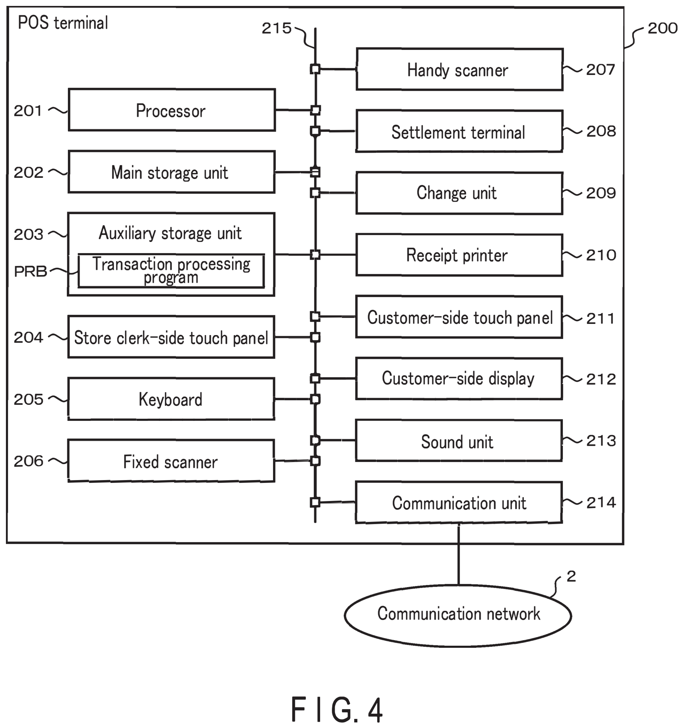

FIG. 4 is a block diagram showing a circuit configuration of a main part of the POS terminal 200.

The POS terminal 200 includes a processor 201, a main storage unit 202, an auxiliary storage unit 203, a store clerk-side touch panel 204, a keyboard 205, a fixed scanner 206, a handy scanner 207, a settlement terminal 208, a change unit 209, a receipt printer 210, a customer-side touch panel 211, a customer-side display 212, a sound unit 213, a communication unit 214, and a bus 215. The processor 201, the main storage unit 202, the auxiliary storage unit 203, the store clerk-side touch panel 204, the keyboard 205, the fixed scanner 206, the handy scanner 207, the settlement terminal 208, the change unit 209, the receipt printer 210, the customer-side touch panel 211, the customer-side display 212, the sound unit 213, and the communication unit 214 are connected to the bus 215. As an example, the processor 201, the main storage unit 202, the auxiliary storage unit 203, the store clerk-side touch panel 204, the keyboard 205, the change unit 209, the receipt printer 210, and the communication unit 214 are provided in the main body unit 298. As another example, the fixed scanner 206, the handy scanner 207, the settlement terminal 208, the customer-side touch panel 211, the customer-side display 212, and the sound unit 213 are provided in the scanner unit 299. However, some of the elements may be provided in a unit opposite to the above. Some of the elements such as the store clerk touch panel and the keyboard may be provided in both the main body unit 298 and the scanner unit 299.

The outline of the functions of the processor 201, the main storage unit 202, the auxiliary storage unit 203, the communication unit 214, and the bus 215 is equivalent to the processor 101, the main storage unit 102, the auxiliary storage unit 103, the communication unit 104, and the bus 105.

Note that the auxiliary storage unit 203 stores a transaction processing program PRB instead of the transaction processing program PRA. The transaction processing program PRB is an application program in which a procedure of information processing of the processor 201 for transaction processing according to an operation by a store clerk in a device included in the POS terminal 200 is described.

The store clerk-side touch panel 204 is provided toward a side of a standing position of the store clerk CL who operates the POS terminal 200 (hereinafter referred to as a store clerk side). The store clerk-side touch panel 204 displays a screen for presenting information to the store clerk CL. In the store clerk-side touch panel 204, an instruction through a touch operation on the screen by the store clerk CL is input.

The keyboard 205 includes a large number of hard keys so that the operation by the store clerk CL from the store clerk side is easy. In the keyboard 205, an instruction of the store clerk CL is input by pressing these hard keys.

The fixed scanner 206 has a reading window facing the store clerk side. The fixed scanner 206 captures an image of a commodity held in front of the reading window, and recognizes barcode information represented by a barcode formed on the commodity through image processing. The fixed scanner 206 then outputs the barcode information to the processor 201. The fixed scanner 206 may be a well-known device of another type that optically reads the barcode using reflection of laser light. The fixed scanner 206 may be a well-known device of a type having a function of identifying, using an object recognition technique, a commodity from an image of the commodity itself obtained by capturing the image of the commodity.

The handy scanner 207 is used by being held by a hand of the store clerk CL and optically reads a barcode facing a reading port. The handy scanner 207 outputs the barcode information represented by the read barcode to the processor 201.

The settlement terminal 208 reads data recorded in a settlement card such as a credit card, a prepaid card, or an electronic money card. Furthermore, the settlement terminal 208 writes data to the settlement card. The settlement terminal 208 includes reading devices supporting IC reading, magnetic reading, and proximity communication reading of a credit card. The reading device for IC reading reads data stored in an integrated circuit (IC) provided in a credit card through communication via an electrical contact. The reading device for magnetic reading reads data magnetically recorded on a magnetic stripe formed on the surface of the credit card using a magnetic head. Thus, both the IC reading and the magnetic reading involve contact between the settlement terminal 208 and the credit card, and are examples of contact reading. Both the IC reading device and the magnetic reading device are examples of the contact reading device. The reading device for proximity communication reading reads data stored in an integrated circuit (IC) provided in a credit card through wireless communication such as near-field communication (NFC). Thus, proximity communication reading is an example of non-contact reading. The reading device for proximity communication reading is an example of a non-contact reading device.

The change unit 209 stores coins inserted from a coin insertion slot in an internal storage while counting the number of coins. The change unit 209 discharges coins stored in the storage to a coin tray via a coin discharge port. The change unit 209 stores bills inserted from a bill insertion slot in the internal storage while counting the number of bills. The change unit 209 discharges bills stored in the storage from a bill discharge port. The bill discharge port holds the discharged bill in a state where a part of the bill is exposed to the outside.

The receipt printer 210 prints an image of a voucher such as a receipt, a payment receipt, or a sales slip on a receipt paper. The receipt printer 210 discharges the receipt paper on which the image is printed from the receipt discharge port to the outside. Hereinafter, the receipt paper on which the image of the receipt is printed is referred to as a paper receipt.

The customer-side touch panel 211 is provided toward a side of the standing position of the customer CU (hereinafter referred to as a customer side) when the transaction commodity is registered through the operation of the store clerk CL. The customer-side touch panel 211 displays a screen for presenting information to the customer. In the customer-side touch panel 211, an instruction through a touch operation on the screen by the customer CU is input.

The customer-side display 212 is provided toward the customer. The customer-side display 212 displays a screen for presenting information to the customer CU. The customer-side display 212 is mainly adapted to display a character string, and displays a screen simpler than the customer-side touch panel 211.

The sound unit 213 outputs sound and voice for various types of guidance and alerts. As the sound unit, various well-known sound devices such as a voice synthesis device and a buzzer may be used singly or in combination.

As the basic hardware of the POS terminal 200, for example, hardware of another existing POS terminal may be adopted. At this time, in general, the provision of the POS terminal 200 may be realized in a state where the transaction processing program PRB is stored in the auxiliary storage unit 203. However, the hardware of the POS terminal 200 in a state where the transaction processing program PRB is not stored in the auxiliary storage unit 203 and the transaction processing program PRB may be individually provided. The transaction processing program PRB may be written in the auxiliary storage unit 203 in response to a manipulation by an operator. Alternatively, the hardware of the POS terminal 200 in a state where a transaction processing program of another version of the same type as the transaction processing program PRB is stored in the auxiliary storage unit 203 and the transaction processing program PRB may be individually provided. The transaction processing program PRB may be written in a form of replacing the information processing program already stored in the auxiliary storage unit 203. The provision of the transaction processing program PRB can be realized by recording it in a removable storage medium such as a magnetic disk, a magneto-optical disk, an optical disk, or a semiconductor memory, or through communication via a network. The transaction processing program PRB may be stored in the main storage unit 202.

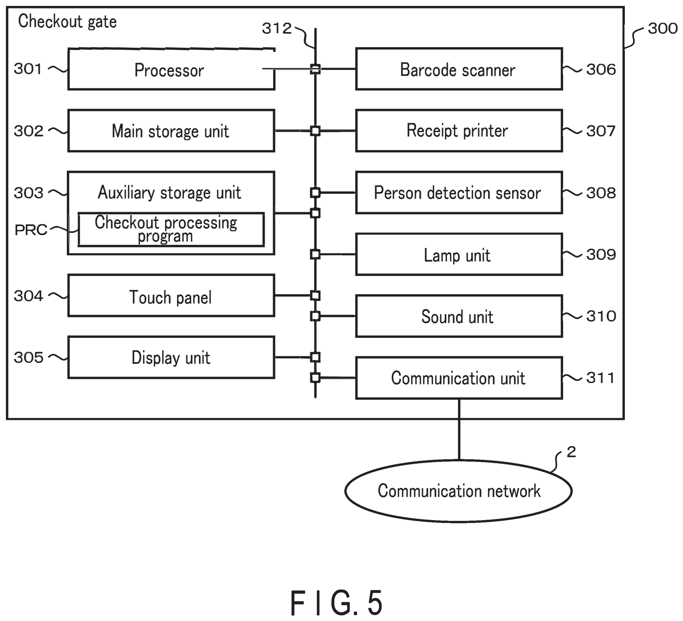

FIG. 5 is a block diagram showing a circuit configuration of a main part of the checkout gate 300.

The checkout gate 300 includes a processor 301, a main storage unit 302, an auxiliary storage unit 303, a touch panel 304, a display unit 305, a barcode scanner 306, a receipt printer 307, a person detection sensor 308, a lamp unit 309, a sound unit 310, a communication unit 311, and a bus 312. The processor 301, the main storage unit 302, the auxiliary storage unit 303, the touch panel 304, the display unit 305, the barcode scanner 306, the receipt printer 307, the person detection sensor 308, the lamp unit 309, the sound unit 310, and the communication unit 311 are connected to the bus 312.

The outline of the functions of the processor 301, the main storage unit 302, the auxiliary storage unit 303, the communication unit 311, and the bus 312 is equivalent to the processor 101, the main storage unit 102, the auxiliary storage unit 103, the communication unit 104, and the bus 105.

Note that the auxiliary storage unit 303 stores a checkout processing program PRC instead of the transaction processing program PRA. The checkout processing program PRC is an application program in which a procedure of information processing of the processor 301 for checkout processing for the payment amount of the transaction commodities registered in the transaction processing apparatus 100 is described. The checkout processing program PRC may be stored in the main storage unit 302.

The touch panel 304 displays a screen for presenting information to an operator who performs an operation for checkout. In the touch panel 304, an instruction through a touch operation on the screen by the operator is input. The operator of the checkout gate 300 is usually the customer CU. However, the store clerk CL may be the operator of the checkout gate 300.

The display unit 305 displays a screen for presenting information to the customer CU who is about to pass through the checkout lane LA facing the checkout gate 300 in which the display unit 305 is provided. In the following description, when simply described as "checkout lane LA" in the description of the checkout gate 300, this indicates the checkout lane LA facing the checkout gate 300.

The barcode scanner 306 has a reading window. The barcode scanner 306 recognizes barcode information represented by a barcode held in front of the reading window through image processing. The barcode scanner 306 then outputs the barcode information to the processor 301. The barcode scanner 306 may be a well-known device of another type that optically reads a barcode using reflection of laser light. The barcode scanner 306 may be a well-known device of a type having a function of identifying, using an object recognition technique, a commodity from an image of the commodity itself obtained by capturing the image of the commodity.

The receipt printer 307 prints an image of a voucher such as a receipt, a payment receipt, or a sales slip on receipt paper. The receipt printer 307 discharges the receipt paper on which the image is printed from the receipt discharge port to the outside. That is, the receipt printer 307 is used to issue a paper receipt.

The person detection sensor 308 detects the customer CU passing through the checkout lane LA. As the person detection sensor 308, a well-known detection device such as an optical sensor or an infrared sensor may be adopted as appropriate. That is, the person detection sensor 308 is an example of a first detection unit.

The lamp unit 309 displays a permission status of the customer CU passing through the checkout lane LA.

The sound unit 310 outputs sound and voice for various types of guidance and alerts regarding the customer CU passing through the checkout lane LA. As the sound unit, various well-known sound devices such as a voice synthesis device and a buzzer may be used singly or in combination.

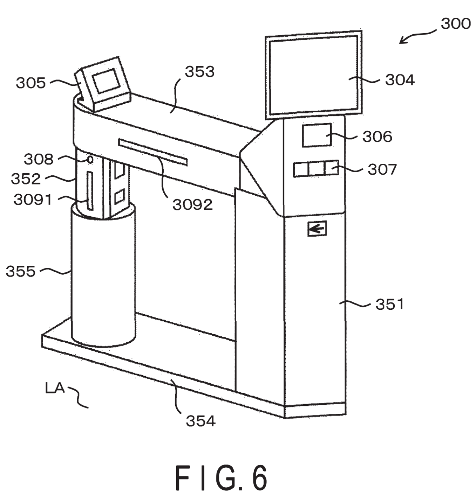

FIG. 6 is a perspective view showing the appearance of the checkout gate 300.

In FIG. 6, the same elements as those shown in FIG. 5 are denoted by the same reference numerals. In the following description of FIG. 6, the left and right sides in FIG. 6 are referred to as the front and rear sides, respectively.

The checkout gate 300 is installed facing the checkout lane LA formed on the front side in FIG. 6.

The checkout gate 300 includes a front housing 351, a rear housing 352, an upper housing 353, a pedestal 354, and a support column 355, in addition to the electrical devices illustrated in FIG. 5.

The front housing 351 has a vertically long box shape. The front housing 351 holds the touch panel 304, the barcode scanner 306, and the receipt printer 307 in a state in which they are exposed to the outside as illustrated. That is, the front housing 351 holds the touch panel 304 at a height at which the operator can easily operate the touch panel 304 in a state in which the touch surface faces the front side. The front housing 351 holds the barcode scanner 306 in a state in which the reading window faces the front side. The front housing 351 holds the receipt printer 307 in a state in which the receipt discharge port faces the front side.

The rear housing 352 has a vertically long box shape. The rear housing 352 holds the person detection sensor 308 and the lamp 3091 in a state in which they are exposed to the outside as illustrated. That is, the rear housing 352 holds the person detection sensor 308 in a state of being able to detect a person passing through the checkout lane LA. The rear housing 352 holds the lamp 3091 in a state in which the lamp is visible to the customer CU who is about to pass through the checkout lane LA and the store clerk CL in a vicinity of the checkout gate 300. The lamp 3091 is included in the lamp unit 309. The lamp 3091 can form a predetermined lighting state indicating that the passage through the checkout lane LA is permitted. The lamp 3091 is, for example, a light emitting diode (LED) lamp capable of lighting up in blue. In the present embodiment, the lamp 3091 is further capable of lighting up in red. The lamp 3091 may be, for example, capable of lighting up in another color.

The upper housing 353 has a horizontally long box shape. The upper housing 353 is attached to the front housing 351 and the rear housing 352 in a state of being bridged between an upper end of the front housing 351 and an upper end of the rear housing 352. The upper housing 353 holds the display unit 305 and the lamp 3092 in a state in which they are exposed to the outside as illustrated. That is, the upper housing 353 holds the display unit 305 by placing the display unit 305 on the top surface in a state in which the display surface thereof faces the front side. The upper housing 353 holds the lamp 3092 in a state in which the lamp 3092 is visible to the customer CU who is about to pass through the checkout lane LA and the store clerk CL in the vicinity of the checkout gate 300. The lamp 3092 is included in the lamp unit 309. The lamp 3092 can form a predetermined lighting state indicating that passage through the checkout lane LA is permitted. The lamp 3092 is, for example, an LED lamp capable of lighting up in blue. In the present embodiment, the lamp 3092 is further capable of lighting up in red. The lamp 3092 may be, for example, capable of lighting up in another color.

The pedestal 354 has an elongated thin plate shape and is placed on the floor of the store. The front housing 351 and the support column 355 are attached to the pedestal 354 near both ends in the longitudinal direction.

The support column 355 has a cylindrical shape, and the rear housing 352 is attached to the upper side of the support column.

The processor 301, the main storage unit 302, the auxiliary storage unit 303, the sound unit 310, and the communication unit 311 in FIG. 1 are appropriately housed in any of the front housing 351, the rear housing 352, the upper housing 353, the pedestal 354, and the support column 355.

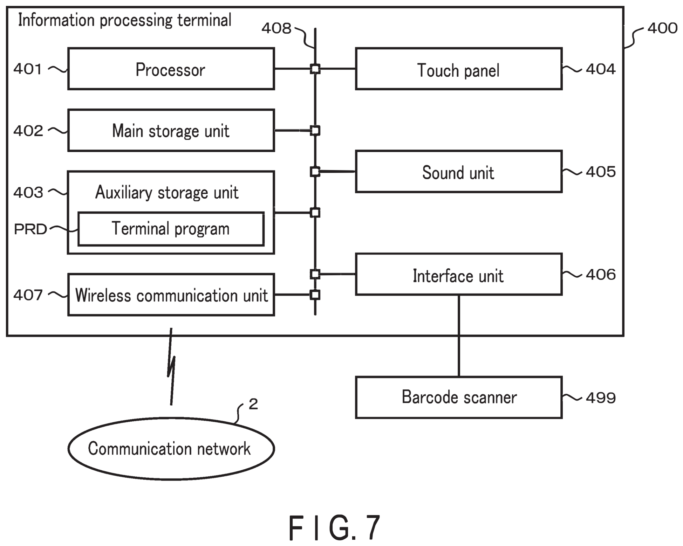

FIG. 7 is a block diagram showing a circuit configuration of a main part of the information processing terminal 400.

The information processing terminal 400 includes a processor 401, a main storage unit 402, an auxiliary storage unit 403, a touch panel 404, a sound unit 405, an interface unit 406, a wireless communication unit 407, a bus 408, and the like. The processor 401, the main storage unit 402, the auxiliary storage unit 403, the touch panel 404, the sound unit 405, the interface unit 406, and the wireless communication unit 407 are capable of communicating with each other via a bus 408.

The outline of the functions of the processor 401, the main storage unit 402, the auxiliary storage unit 403, and the bus 408 is equivalent to the processor 101, the main storage unit 102, the auxiliary storage unit 103, the communication unit 104, and the bus 105.

Note that the auxiliary storage unit 403 stores a terminal program PRD instead of the transaction processing program PRA. The terminal program PRD is an application program in which a procedure of information processing of the processor 401 for causing the information processing terminal 400 to function as a user interface for registering a transaction commodity in the transaction processing apparatus 100 is described.

The touch panel 404 displays a screen for presenting information to the operator. In the touch panel 404, an instruction through a touch operation on the screen by the operator is input. The operator of the information processing terminal 400 is usually the customer CU. However, the store clerk CL may be the operator of the information processing terminal 400.

The sound unit 405 outputs sound and voice for various types of guidance and alerts. As the sound unit, various well-known sound devices such as a voice synthesis device and a buzzer may be used singly or in combination.

An external device such as a barcode scanner 499 is connected to the interface unit 406. The interface unit 406 interfaces data transmission and reception with a connected external device. As the interface unit 406, an existing universal serial bus (USB) controller or the like can be used. The barcode scanner 499 is attached to the cart CA and has a reading window. The barcode scanner 499 recognizes barcode information represented by a barcode held in front of the reading window through image processing. The barcode scanner 499 outputs the barcode information. The barcode scanner 499 may be a well-known device of another type that optically reads a barcode using reflection of laser light. The barcode scanner 499 may be a well-known device of a type having a function of identifying, using an object recognition technique, a commodity from an image of the commodity itself obtained by capturing the image of the commodity. Instead of or in addition to the barcode scanner 499, a camera provided in the information processing terminal 400 may be used to read the barcode.

The wireless communication unit 407 executes communication processing for wirelessly performing data communication via the communication network 2. For the wireless communication unit 407, for example, an existing wireless communication device for a wireless LAN may be adopted. Note that a communication unit connected to the communication network 2 in a wired manner may be used instead of or in addition to the wireless communication unit 407.

For the basic hardware of the information processing terminal 400, for example, it is assumed that hardware of a tablet-type information processing apparatus is used. In general, the provision of the information processing terminal 400 may be realized in a state in which the terminal program PRD is stored in the auxiliary storage unit 403. However, the hardware in a state in which the terminal program PRD is not stored in the auxiliary storage unit 403 or in a state in which the application program of another version of the same type is stored in the auxiliary storage unit 403 and the terminal program PRD may be individually provided. The information processing terminal 400 may be configured by writing the terminal program PRD into the auxiliary storage unit 403 in response to a manipulation by an operator. The provision of the terminal program PRD can be realized by recording it in a removable storage medium such as a magnetic disk, a magneto-optical disk, an optical disk, or a semiconductor memory, or through communication via a network. The terminal program PRD may be stored in the main storage unit 402.

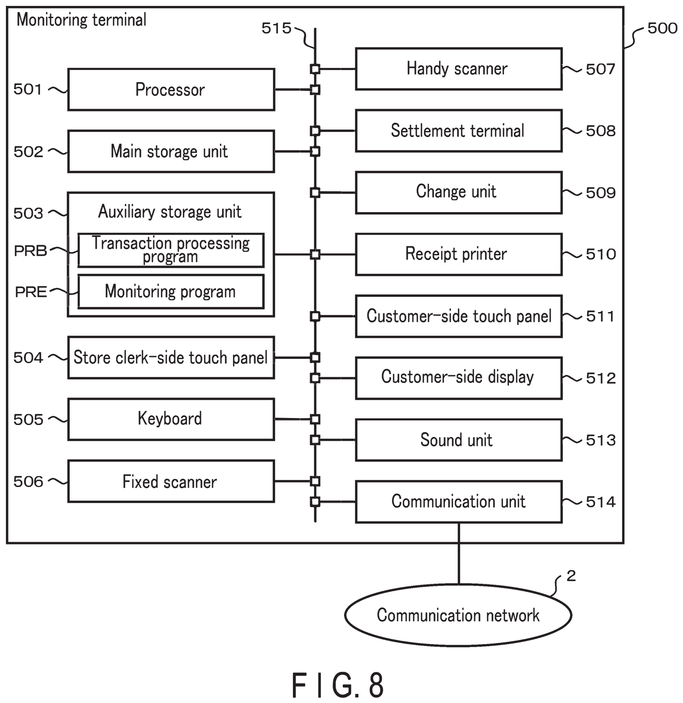

FIG. 8 is a block diagram showing a circuit configuration of a main part of the monitoring terminal 500.

The monitoring terminal 500 includes a processor 501, a main storage unit 502, an auxiliary storage unit 503, a store clerk-side touch panel 504, a keyboard 505, a fixed scanner 506, a handy scanner 507, a settlement terminal 508, a change unit 509, a receipt printer 510, a customer-side touch panel 511, a customer-side display 512, a sound unit 513, a communication unit 514, and a bus 515.

The outline of the functions of the processor 501, the main storage unit 502, the auxiliary storage unit 503, the sound unit 513, the communication unit 514, and the bus 515 is equivalent to the processor 101, the main storage unit 102, the auxiliary storage unit 103, the communication unit 104, and the bus 105. The functions of the store clerk-side touch panel 504, the keyboard 505, the fixed scanner 506, the handy scanner 507, the settlement terminal 508, the change unit 509, the receipt printer 510, the customer-side touch panel 511, the customer-side display 512, and the sound unit 513 are equivalent to those of the store clerk-side touch panel 204, the keyboard 205, the fixed scanner 206, the handy scanner 207, the settlement terminal 208, the change unit 209, the receipt printer 210, the customer-side touch panel 211, the customer-side display 212, and the sound unit 213. That is, the monitoring terminal 500 has the same hardware configuration as the POS terminal 200.

Note that the auxiliary storage unit 503 stores a monitoring program PRE in addition to the transaction processing program PRB. The monitoring program PRE is an application program in which a procedure of information processing for supporting the store clerk CL who monitors fraudulent passage through the checkout lane LA is described. Thus, the monitoring terminal 500 is a device in which a monitoring support function is added to the POS terminal 200. However, the monitoring terminal 500 may be configured without the transaction processing function. In this case, as the basic hardware of the monitoring terminal 500, various types of general-purpose computer devices such as a desktop type, a book type, and a tablet type can be used.

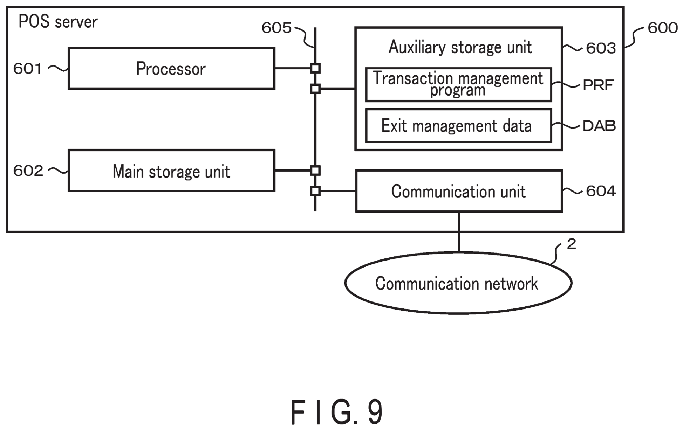

FIG. 9 is a block diagram showing a circuit configuration of a main part of the POS server 600.

The POS server 600 includes a processor 601, a main storage unit 602, an auxiliary storage unit 603, a communication unit 604, and a bus 605.

The outline of the functions of the processor 601, the main storage unit 602, the auxiliary storage unit 603, the communication unit 604, and the bus 605 is equivalent to the processor 101, the main storage unit 102, the auxiliary storage unit 103, the communication unit 104, and the bus 105.

Note that the auxiliary storage unit 603 stores a transaction management program PRF instead of the transaction processing program PRA. The transaction management program PRF is an application program in which a procedure of information processing of the processor 601 for management related to transactions processed by the commodity sales system 1 is described. A part of the storage area of the auxiliary storage unit 603 is used for storing exit management data DAB. The exit management data DAB will be described later.

Next, the operation of the commodity sales system 1 configured as described above will be described. The descriptions of the processing operations below are merely presented as examples. The sequence of the processing operations may be partly changed or partly omitted, or some other processing operation may be added as appropriate. In the following explanation, the description of the processing is partly omitted in order to clarify the characteristic operation of the present embodiment. For instance, at the occurrence of an error, processing for dealing with such an error may be performed. The description of such processing, however, is omitted here.

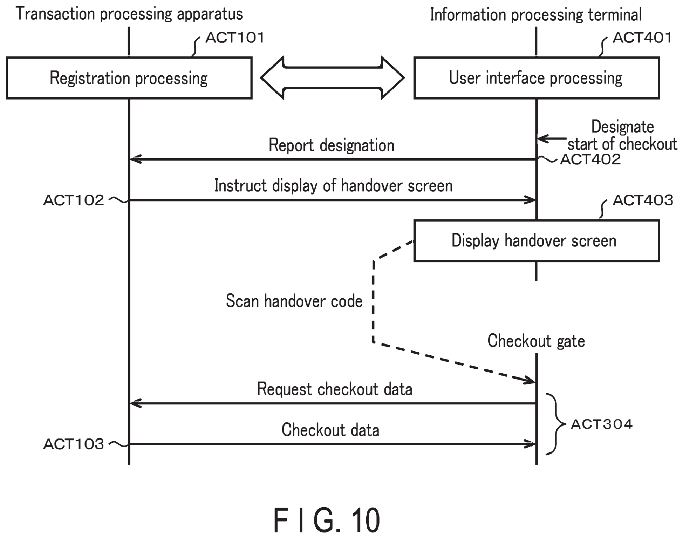

FIG. 10 is a sequence diagram showing a rough procedure from registration of content of a transaction using the information processing terminal 400 to handover of checkout for the registered transaction to the checkout gate 300.

In the transaction processing apparatus 100 and the information processing terminal 400, the processor 101 and the processor 401 perform the registration processing as ACT 101 and the user interface processing as ACT 401 in cooperation with each other. Accordingly, the processor 101 registers commodities to be purchased by the customer CU as transaction commodities while receiving an instruction from the customer CU using the information processing terminal 400 as a user interface terminal, and generates transaction data DAA representing a list of transaction commodities. Details of the registration processing and the user interface processing may be the same as those of processing already performed to provide an existing cart POS service, for example.

Upon the customer CU performing a predetermined operation for designating the checkout start on the information processing terminal 400, the processor 401 of the information processing terminal 400 proceeds to ACT 402.

At ACT 402, the processor 401 notifies the transaction processing apparatus 100 that the checkout start has been designated.

Upon the checkout start designation being reported, the processor 101 of the transaction processing apparatus 100 proceeds to ACT 102.

At ACT 102, the processor 101 instructs the information processing terminal 400 to display a handover screen.

Upon receiving an instruction to display the handover screen, the processor 401 of the information processing terminal 400 proceeds to ACT 403.

At ACT 403, the processor 401 causes the touch panel 404 to display the handover screen. The handover screen is a screen for handing over the function as the user interface terminal related to the transaction being processed from the information processing terminal 400 to the checkout gate 300. The handover screen includes, for example, a two dimensional code (hereinafter referred to as a handover code) representing handover data for the checkout gate 300 to request the checkout data based on the transaction data DAA from the transaction processing apparatus 100.

In a case where a plurality of checkout gates 300 are installed, the customer CU arbitrarily selects a checkout gate 300 in the standby state from them, and holds the handover code included in the handover screen over the barcode scanner 306 included in the checkout gate 300.

On the other hand, when in the operation state in which the use by the customer CU is permitted, the processor 301 of the checkout gate 300 executes information processing according to the checkout processing program PRC (hereinafter referred to as checkout processing).

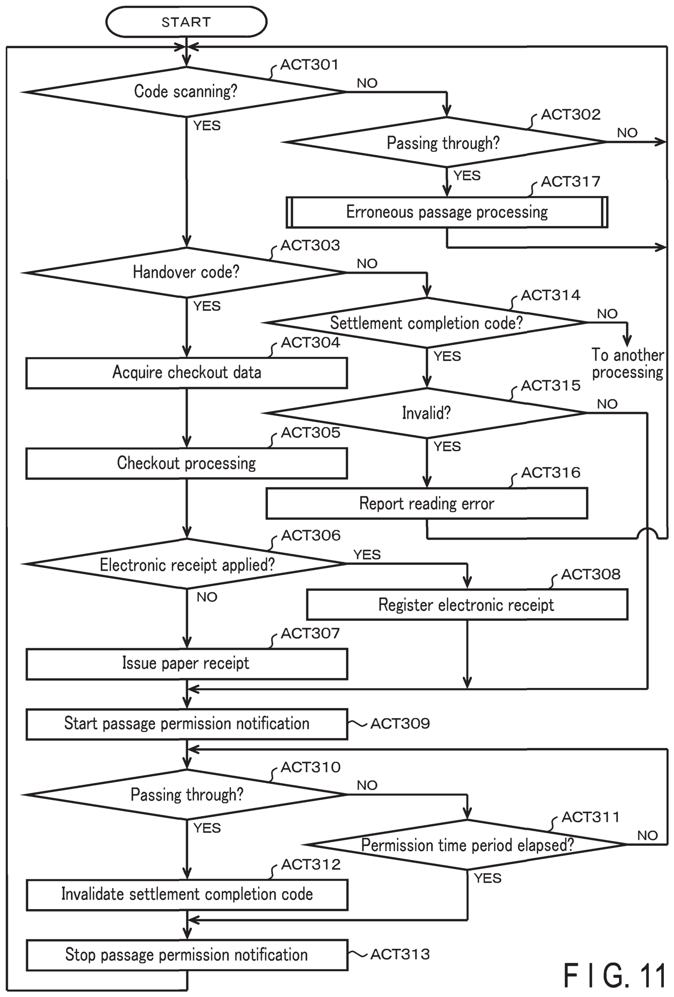

FIG. 11 is a flowchart of the checkout processing.

At ACT 301, the processor 301 confirms whether the two dimensional code is scanned. If the corresponding event cannot be confirmed, the processor 301 determines NO and proceeds to ACT 302.

At ACT 302, the processor 301 confirms whether a person has passed through the checkout lane LA. If the corresponding event cannot be confirmed, the processor 301 determines NO and returns to ACT 301.

In this manner, the processor 301 waits for scanning of the two dimensional code or passage of the person as ACT 301 and ACT 302. Upon confirming that any two dimensional code is read by the barcode scanner 306, the processor 301 determines YES at ACT 301 and proceeds to ACT 303.

At ACT 303, the processor 301 confirms whether the two dimensional code read by the barcode scanner 306 is a handover code. Upon the barcode scanner 306 reading the handover code held as described above, the processor 301 determines YES and proceeds to ACT 304.

At ACT 304, the processor 301 acquires checkout data based on the handover data represented by the handover code read by the barcode scanner 306. That is, as illustrated in FIG. 10, the processor 301 requests the checkout data from the transaction processing apparatus 100 based on the handover data.

Upon the checkout data being requested by the checkout gate 300, the processor 101 of the transaction processing apparatus 100 proceeds to ACT 103.

At ACT 103, the processor 101 transmits predetermined checkout data for accounting and settlement of the payment amount according to the transaction content represented by the transaction data DAA to the checkout gate 300 of the request source. At ACT 304, the processor 301 of the checkout gate 300 then acquires the checkout data transmitted in this manner and received by the communication unit 311.

Upon acquiring the checkout data in this manner, the processor 301 proceeds to ACT 305 in FIG. 11.

At ACT 305, the processor 301 performs checkout processing based on the acquired checkout data. That is, the processor 301 performs, for example, accounting processing for determining a settlement amount for the transaction based on the acquired checkout data. The accounting processing may be, for example, the same processing as that performed by the checkout machine of the existing semi-self-service type POS system. The processor 301 then performs, for example, settlement processing for settling the settlement amount determined as described above. As an example, it is assumed that the settlement processing is performed by applying electronic money uniquely provided by a company that operates the store. In this case, an identifier of the customer CU is acquired at the time when the information processing terminal 400 is started to be used, and the electronic money balance associated with the identifier is used, performing the settlement. Note that for the settlement at the checkout gate 300, various settlement methods such as credit settlement, code settlement, prepaid settlement, point settlement, gift certificate settlement, or cash settlement may be appropriately used. Furthermore, for the settlement at the checkout gate 300, electronic money settlement provided by a settlement operator different from the company operating the store may be available. In this manner, by the processor 301 executing the information processing based on the checkout processing program PRC, the computer that has the processor 301 serving as its center functions as a settlement unit. The accounting processing may be performed by another device such as the transaction processing apparatus 100 or the POS server 600.

At ACT 306, the processor 301 confirms whether an electronic receipt is to be applied. If the identifier of the customer CU is acquired as described above, the processor 301 confirms whether the setting of applying the electronic receipt is set in advance for the customer CU identified by the identifier. The processor 301 may have the customer CU designate whether to apply the electronic receipt and may confirm whether to apply the electronic receipt according to the designation. If it is not confirmed that the electronic receipt is to be applied, the processor 301 determines NO and proceeds to ACT 307. Note that the processor 301 may perform determination of ACT 307 according to the designation by the customer CU of whether or not to apply the electronic receipt.

At ACT 307, the processor 301 issues a paper receipt indicating the content of the transaction, the checkout result, etc., and the settlement completion code. That is, the processor 301 generates a receipt image indicating, for example, the content of the transaction, the checkout result, etc., and the settlement completion code, and causes the receipt printer 307 to print the receipt image. Accordingly, the receipt printer 307 prints the receipt image on the receipt paper, and thus the created paper receipt is issued. The settlement completion code is a two-dimensional code and represents settlement completion data including at least an identifier capable of identifying each of the transactions for which settlement has been completed (hereinafter referred to as a completion identifier). The settlement completion data is an example of completion information. The settlement completion code may be a code of another type such as a one-dimensional barcode as long as the code is optically readable.

On the other hand, if the processor 301 can confirm that the electronic receipt is to be applied, the processor 301 determines YES at ACT 306 and proceeds to ACT 308.

At ACT 308, the processor 301 registers an electronic receipt including the content of the transaction, the checkout result, etc., and the settlement completion code, in the electronic receipt server 3. That is, the processor 301 transmits predetermined request data for requesting registration of an electronic receipt to the electronic receipt server 3 together with the notification of the content of the transaction, the checkout result, etc., and the settlement completion code. Upon receipt of the request data, the electronic receipt server 3 enables an electronic receipt screen showing the content of the reported transaction, the checkout result, etc., and the settlement completion code to be viewed from any information terminal.

Upon completing ACT 307 or ACT 308, the processor 301 proceeds to ACT 309 in either case.

At ACT 309, the processor 301 starts a passage permission notification. The passage permission notification serves to make a person in the vicinity aware that the passage through the checkout lane LA is permitted. The processor 301 lights both the lamps 3091 and 3092 in blue, for example, for the passage permission notification. The processor 301 causes the sound unit 310 to output a voice message such as "Please pass through the gate." for example, for the passage permission notification. Alternatively, the processor 301 may cause the sound unit 310 to perform another operation such as outputting a predetermined notification sound, for example, for the passage permission notification. Note that the processor 301 may execute only some of these for the passage permission notification. All of the various displays and various sound outputs exemplified here are examples of a notification operation to make a person in the vicinity aware that the customer CU is permitted to pass through the checkout lane LA and exit the store. Thus, the lamps 3091 and 3092 and the sound unit 310 are examples of the operation unit.

In addition, the processor 301 causes the touch panel 304 to display, for example, a first guide screen in addition to the above for the passage permission notification. The processor 301 causes the display unit 305 to display, for example, a second guide screen in addition to the above for the passage permission notification.

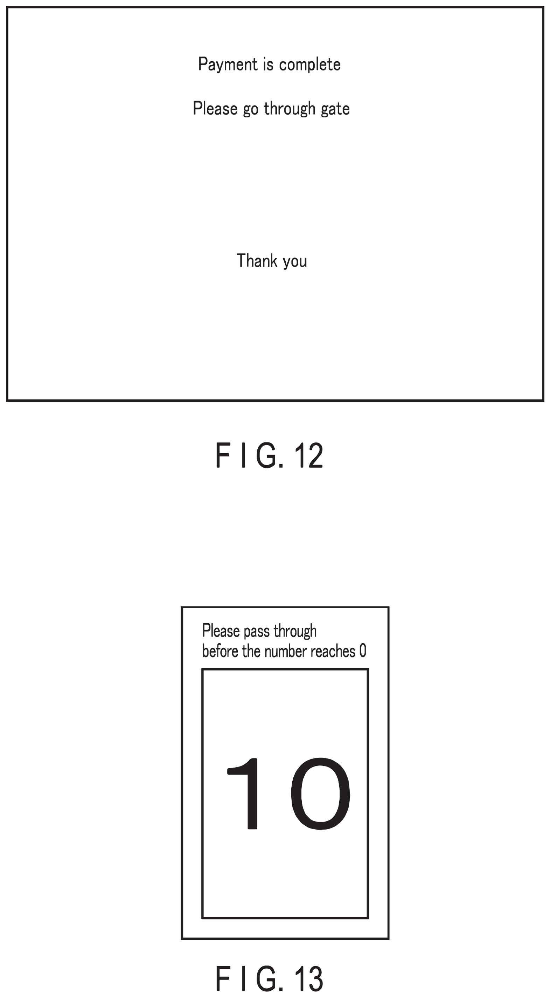

FIG. 12 is a diagram illustrating an example of the first guide screen.

The first guide screen includes a text message indicating that since the checkout is completed, it is permitted to pass through the checkout lane LA.

Note that the first guide screen and various screens described later illustrate main display objects, and illustration of some display objects may be omitted. For example, an image for causing the user to imagine an operation to be performed by the user may be included on the screen. The first guide screen and various screens described later are examples, and may be appropriately determined by, for example, a creator of the checkout processing program PRC.

FIG. 13 is a diagram illustrating an example of the second guide screen.

The second guide screen includes a text message indicating that there is a limit to the time it is permitted to pass through the checkout lane LA, and a number indicating the remaining time it is permitted to pass through the checkout lane LA.

The second guide screen illustrated in FIG. 13 is an example in which the remaining time is 10 seconds, and the number "10" represents the remaining time. For the second guide screen, the processor 301 updates the number representing the remaining time every time the remaining time changes.

The second guide screen enables people to recognize the remaining time of the time period in which the passage through the checkout lane LA is permitted. Based on this screen, the customer CU can determine whether the customer CU should pass in a hurry.

The processor 301 proceeds to ACT 310 in a state in which the passage permission notification is being performed.

At ACT 310, the processor 301 confirms whether a person has passed through the checkout lane LA. If the corresponding event cannot be confirmed, the processor 301 determines NO and proceeds to ACT 311.

At ACT 311, the processor 301 confirms whether a predetermined permission time has elapsed since the passage permission notification started at ACT 309. If the corresponding event cannot be confirmed, the processor 301 determines NO and returns to ACT 310.

In this manner, at ACT 310 and ACT 311, the processor 301 waits for passage of the person or elapse of the permission time.

When the customer CU passes through the checkout lane before the permission time elapses and the person detection sensor 308 thus detects the passage of the person, the processor 301 determines YES at ACT 310 and proceeds to ACT 312.

At ACT 312, the processor 301 invalidates the settlement completion code included in the paper receipt or the electronic receipt at ACT 307 or ACT 308. That is, the processor 301, for example, requests the POS server 600 to perform invalidation together with a notification of a completion identifier included in the settlement completion code.

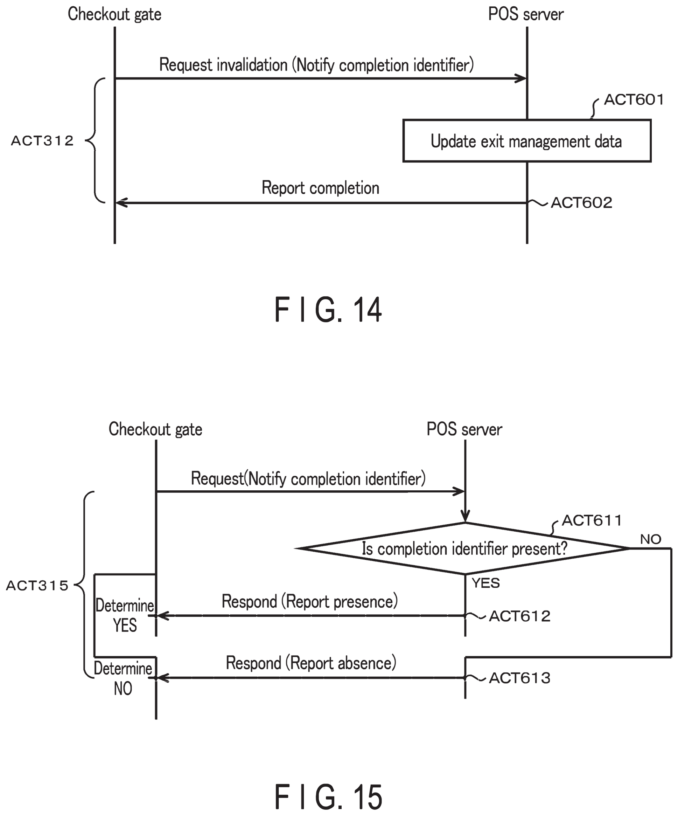

FIG. 14 is a sequence diagram showing the interaction between the checkout gate 300 and the POS server 600 related to the invalidation of the settlement completion code.

Upon receiving the request, the processor 601 of the POS server 600 proceeds to ACT 601 in the processing according to the transaction management program PRF.

At ACT 601, the processor 601 updates the exit management data DAB. The processor 601, for example, updates the exit management data DAB so as to include the completion identifier reported at the time of the invalidation request. That is, the processor 601 sets the exit management data DAB to data representing an invalid completion identifier. The processor 601 may update the exit management data DAB so as to include any information for management related to the invalidation, such as including information of the date and time of the update in the exit management data DAB in association with the completion identifier. In addition, the processor 301 of the checkout gate 300 may notify the POS server 600 of other information in addition to the completion identifier at the time of the invalidation request. The processor 601 of the POS server 600 may include information other than the reported completion identifier in the exit management data DAB in association with the completion identifier. That is, the processor 301 may notify the POS server 600 of the settlement completion data, for example. The processor 601 may update the exit management data DAB to include the settlement completion data.

At ACT 602, the processor 601 notifies the checkout gate 300 that has requested the invalidation of the completion of the invalidation.

In response to the notification of the completion of the invalidation, the processor 301 of the checkout gate 300 ends ACT 312 and proceeds to ACT 313 in FIG. 11.

At ACT 313, the processor 301 stops the passage permission notification. The processor 301 then returns to the waiting state of ACT 301 and ACT 302.

In this manner, the checkout gate 300 performs the passage permission notification and permits the customer CU to pass through the checkout lane LA during a period from issuance of the paper receipt or the electronic receipt upon completion of the settlement until the customer CU passes through the checkout lane LA.

In some circumstances, the customer CU may not pass through the checkout lane LA within the permission time. For example, even after the checkout is completed, the customer CU may return to the sales floor or elsewhere without passing through the checkout lane LA, in which case the customer CU does not pass through the checkout lane LA within the permission time. In such a case, the processor 301 determines YES at ACT 311, skips ACT 312, and proceeds to ACT 313 to stop the passage permission notification.

In this manner, the checkout gate 300 performs the passage permission notification and permits the customer CU to pass through the checkout lane LA during a period from issuance of the paper receipt or the electronic receipt upon completion of the settlement until the permission time elapses without the customer CU passing through the checkout lane LA.

As described above, the period in which the checkout gate 300 permits the customer CU to pass through the checkout lane LA is a period from issuance of the paper receipt or the electronic receipt after completion of the settlement until the customer CU passes through the checkout lane LA, or a period from issuance of the paper receipt or the electronic receipt after completion of the settlement until the permission time elapses. These periods correspond to the first permission time period. In this manner, by the processor 301 executing the information processing based on the checkout processing program PRC, the computer that has the processor 301 serving as its center functions as a first control unit.

With such a passage permission notification, it is possible to easily monitor whether the customer CU exiting the store has completed the settlement. In addition, with such a passage permission notification, the customer CU can reliably recognize whether the customer CU is permitted to exit the store.

The processor 301 may execute ACT 309 between ACT 305 and ACT 306. In this case, the time point of completion of the settlement is the start point of the first permission time period. In addition, a sensor that detects removal of the issued paper receipt may be further provided, and the processor 301 may proceed to ACT 309 when it is confirmed that removal of the paper receipt is detected after ACT 307 is executed. In this case, the time point at which the removal of the paper receipt is detected is the start point of the first permission time period. In this manner, the first permission time period may be appropriately set by, for example, a designer of the checkout processing program PRC or an administrator of the checkout gate 300.

In a case where the customer CU who did not pass through the checkout lane LA within the permission time intends to exit the store without purchasing additional commodities, the customer CU holds the settlement completion code shown on the paper receipt or the electronic receipt screen over the barcode scanner 306 of any checkout gate 300 that is in the standby state. The settlement completion code may be included in the paper receipt or the electronic receipt screen issued by the POS terminal 200, similarly to the checkout gate 300. The customer CU who has completed the settlement with the POS terminal 200 may also hold the settlement completion code shown on the paper receipt or the electronic receipt screen issued by the POS terminal 200 over the barcode scanner 306 of any checkout gate 300 in the standby state.

Upon the settlement completion code being held out, the barcode scanner 306 reads the settlement completion code and notifies the processor 301 of settlement completion data. Accordingly, the processor 301 acquires the settlement completion data. In this manner, the processor 301 executes the information processing based on the checkout processing program PRC, and thus the computer that has the processor 301 serving as the center functions as an acquisition unit that acquires the settlement completion data as the completion information.

Upon the settlement completion code being read by the barcode scanner 306, the processor 301 determines YES at ACT 301 and NO at ACT 303, and proceeds to ACT 314.

At ACT 314, the processor 301 confirms whether the two dimensional code read by the barcode scanner 306 is a settlement completion code. The processor 301 determines NO when the two dimensional code read by the barcode scanner 306 is not the settlement completion code, and proceeds to other processing according to the read two dimensional code. For example, the processor 301 confirms that the read two dimensional code is not a reading target, and performs error processing for notifying the customer CU that an erroneous two dimensional code is being held out.

On the other hand, upon the settlement completion code held out as described above being read by the barcode scanner 306, the processor 301 determines YES at ACT 314 and proceeds to ACT 315.

At ACT 315, the processor 301 confirms whether the read settlement completion code is invalid.

FIG. 15 is a sequence diagram showing the interaction between the checkout gate 300 and the POS server 600 for confirming whether the settlement completion code is invalid.

At ACT 315, the processor 301 of the checkout gate 300 makes an inquiry with a notification of the completion identifier included in the settlement completion data indicated by the read settlement completion code.

Upon receipt of the inquiry, the processor 601 of the POS server 600 proceeds to ACT 611 in the processing according to the transaction management program PRF.

At ACT 611, the processor 601 confirms whether the reported completion identifier is included in the exit management data DAB. Upon confirming that the reported completion identifier is included in the exit management data DAB, the processor 601 determines YES and proceeds to ACT 612.

At ACT 612, the processor 601 transmits a presence notification as a response to the inquiry to the checkout gate 300 that has made the inquiry. Upon receipt of the presence notification, the processor 301 of the checkout gate 300 determines YES at ACT 315.

If it is not confirmed that the reported completion identifier is included in the exit management data DAB, the processor 601 of the POS server 600 determines NO at ACT 611 and proceeds to ACT 613.

At ACT 613, the processor 601 transmits an absence notification in response to the inquiry to the checkout gate 300 that has made the inquiry. Upon receipt of the absence notification, the processor 301 of the checkout gate 300 determines NO at ACT 315.

Upon determining NO at ACT 315 as described above, the processor 301 proceeds to ACT 309 in FIG. 11 and executes the subsequent steps in the same manner as described above. However, at this time, if YES is determined at ACT 310 and ACT 312 is proceeded to, the processor 301 sets the settlement completion code read as described above as a target of invalidation.

In this manner, in a case where the customer CU holds the non-invalidated settlement completion code over the barcode scanner 306, the checkout gate 300 performs the passage permission notification and permits the customer CU to pass through the checkout lane LA until the customer CU passes through the checkout lane LA or the permission time elapses. Upon the customer CU passing through the checkout lane LA in the permission time period, the settlement completion code used at this time is invalidated. That is, by the processor 301 executing the information processing based on the checkout processing program PRC, the computer that has the processor 301 serving as its center functions as the second control unit, the second detection unit, and the invalidation unit.

Here, the period during which the checkout gate 300 permits the customer CU to pass through the checkout lane LA is a period from when the non-invalidated settlement completion data is acquired to when the customer CU passes through the checkout lane LA, or a period from when the non-invalidated settlement completion data is acquired to when the permission time elapses. These periods thus correspond to the second permission time period.

In this manner, the checkout gate 300 can easily monitor whether the customer exiting the store has completed the settlement even for the customer CU who has finished the settlement at another checkout gate 300 or the POS terminal 200. The checkout gate 300 can also prevent the same settlement completion code from being repeatedly used for a plurality of times of passing through the checkout lane.

Upon receipt of the presence notification as a response to the inquiry as described above and determining YES at ACT 315, the processor 301 proceeds to ACT 316.

At ACT 316, the processor 301 performs a reading error notification. This is a notification to the customer CU that an error has occurred because the settlement completion code held out over the barcode scanner 306 is invalid. The processor 301 causes the touch panel 304 to display a screen showing a text message for guidance that the two dimensional code held out is invalid because it has been used, for example, for the reading error notification. Alternatively, the processor 301 lights both the lamps 3091 and 3092 in red, for example, for the reading error notification. The processor 301 causes the sound unit 310 to output a voice message such as "This two dimensional code has been used.", for example, for the reading error notification. Furthermore, the processor 301 may cause the sound unit 310 to perform another operation such as outputting a predetermined error sound, for example, for the reading error notification. Note that the processor 301 may execute only some of these for the reading error notification.

Then, the processor 301 returns to the waiting state of ACT 301 and ACT 302.

Thus, in a case where the settlement completion code held out over the barcode scanner 306 is on the paper receipt or the electronic receipt issued for the transaction with which the customer CU passed through the checkout lane LA within the permission time after the settlement, or a case where the settlement completion code was held out in the past by the customer CU to pass through the checkout lane LA, the checkout gate 300 determines that an error has occurred and does not permit the customer CU to pass through the checkout lane LA.

In a case where the customer CU passes through the checkout lane LA of the checkout gate 300 in the standby state and this is detected by the person detection sensor 308, the processor 301 of the checkout gate 300 determines YES at ACT 302 and proceeds to ACT 317.

At ACT 317, the processor 301 executes erroneous passage processing.

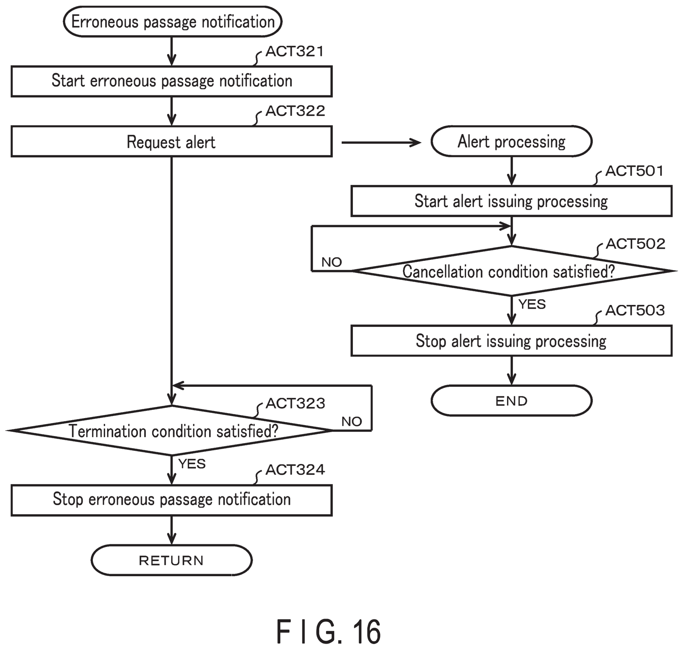

FIG. 16 is a flowchart of erroneous passage processing by the processor 301 of the checkout gate 300 and alert processing by the processor 501 of the monitoring terminal 500.

At ACT 321, the processor 301 starts the erroneous passage notification. The erroneous passage notification is a notification to the customer CU and other people in the vicinity that the customer CU has passed through the checkout lane LA through which the customer CU is not permitted to pass. The processor 301 causes the touch panel 304 to display a first warning screen, for example, for the erroneous passage notification. The processor 301 causes the display unit 305 to display a second warning screen, for example, for the erroneous passage notification. The processor 301 lights both the lamps 3091 and 3092 in red, for example, for the erroneous passage notification. The processor 301 causes the sound unit 310 to output a predetermined notification sound, for example, for the erroneous passage notification. Alternatively, the processor 301 may cause the sound unit 310 to perform another operation such as outputting a predetermined voice message, for example, for the erroneous passage notification. Note that the processor 301 may execute only some of these for the passage permission notification.

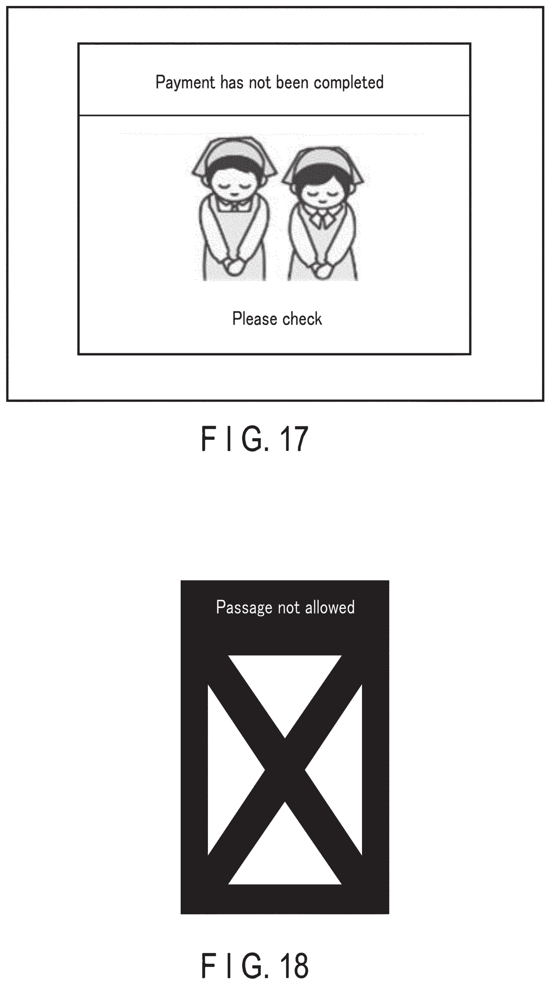

FIG. 17 is a diagram illustrating an example of the first warning screen.

FIG. 18 is a diagram illustrating an example of the second warning screen.

At ACT 332 in FIG. 16, the processor 301 requests an alert to a predetermined request destination. In the present embodiment, it is assumed that the monitoring terminal 500 is set as the request destination of the alert.

The monitoring terminal 500 is installed at, for example, a service counter of the store. The monitoring terminal 500 performs an operation for transaction processing through the same operation as that of the existing POS terminal of the same type. Accordingly, the monitoring terminal 500 can be used for support when the POS terminal 200 is congested. The monitoring terminal 500 can be used to respond to various requests by the customer CU, such as a return of goods.

Upon receipt of the request for the alert from the checkout gate 300 as described above, the processor 501 of the monitoring terminal 500 executes alert processing shown in FIG. 16 according to the monitoring program PRE.

At ACT 501, the processor 501 starts alert issuing processing. The alert issuing processing is processing for issuing an alert about the fraudulent passage through the checkout lane LA to the store clerk CL who is in charge of monitoring using the monitoring terminal 500. The processor 501 causes the store clerk-side touch panel 504 to display a warning screen for causing the store clerk CL to recognize that there is a fraudulent passage, for example, for the alert issuing processing. The processor 501 causes the sound unit 513 to output a predetermined alert sound, for example, for the alert issuing processing. Alternatively, the processor 501 may cause the sound unit 513 to perform another operation such as outputting a predetermined voice message, for example, for the alert issuing processing. Note that the processor 501 may execute only some of these for the alert issuing processing.

Thus, the request for an alert by the processor 301 of the checkout gate 300 is an example of the alert processing for issuing an alert. That is, by the processor 301 executing the information processing based on the checkout processing program PRC, the computer that has the processor 301 serving as a center functions as an alert unit.

The processor 301 may execute, as the alert processing, processing of controlling the sound unit 310 of the checkout gate 300 to emit a predetermined alert sound, for example. The processor 301 may control an alert device provided separately from the checkout gate 300 in the vicinity of the checkout lane LA to execute the alert issuing processing.

With such alert processing, the checkout gate 300 can easily monitor passage through the checkout lane LA outside the permission time period.

At ACT 502, the processor 501 waits for an alert cancellation condition to be satisfied. The cancellation condition may be appropriately set by, for example, a designer of the monitoring program PRE or an administrator of the monitoring terminal 500. The cancellation condition is assumed to be, for example, a case where the cancellation is instructed through a predetermined operation on the store clerk-side touch panel 504 or the keyboard 505. Alternatively, the cancellation condition is assumed to be a case where the duration of the alert processing exceeds a predetermined time. Then, the processor 501 determines YES upon the cancellation condition being satisfied, and proceeds to ACT 503.

At ACT 503, the processor 501 stops the alert issuing processing. Then, the processor 501 ends the current alert processing.

The processor 301 of the checkout gate 300 requests the alert at ACT 322 and then proceeds to ACT 323.

At ACT 323, the processor 301 waits for a termination condition of the erroneous passage notification to be satisfied. The termination condition may be appropriately set by, for example, a designer of the checkout processing program PRC or an administrator of the checkout gate 300. The termination condition is assumed to be, for example, a case where the duration of the erroneous passage notification exceeds a predetermined time. Alternatively, the cancellation condition is assumed to be a case where cancellation of the alert processing is instructed by the monitoring terminal 500. In this case, the processor 501 of the monitoring terminal 500 determines that the cancellation condition is satisfied when the cancellation is instructed and determines YES at ACT 502, and notifies the checkout gate 300 that the cancellation is instructed before or after ACT 503. Alternatively, the termination condition is assumed to be a case where a predetermined cancellation operation is performed by the store clerk at the checkout gate 300. Then, the processor 301 determines YES upon the termination condition being satisfied, and proceeds to ACT 324.

At ACT 324, the processor 301 stops the erroneous passage notification. Then, the processor 301 terminates the current erroneous passage processing and returns to the waiting state of ACT 301 and ACT 302 in FIG. 11.

As described above, according to the checkout gate 300, it is possible to easily monitor whether or not the customer exiting the store has completed the settlement.

The embodiment can be modified in various ways as follows.

The checkout gate 300 may be configured such that a device having a function as a checkout machine and a device having a function as a gate are separate.

Whether the settlement completion data is invalid may be managed by another arbitrary method. For example, each time a paper receipt or an electronic receipt is issued, the settlement completion data represented by the settlement completion code included in the paper receipt or the electronic receipt or the completion identifier included in the settlement completion data is added to the exit management data DAB. That is, the exit management data DAB is data representing a list of valid completion identifiers. If the settlement completion data represented by the settlement completion code scanned by the checkout gate 300 or the completion identifier included in the settlement completion data is included in the exit management data DAB, passage through the checkout lane LA is permitted. Then, the corresponding settlement completion data or completion identifier is deleted from the exit management data DAB. Alternatively, for example, each time a paper receipt or an electronic receipt is issued, the settlement completion data represented by the settlement completion code included in the paper receipt and the electronic receipt or the completion identifier included in the settlement completion data is added to the exit management data DAB in association with flag data indicating that the settlement completion data or the completion identifier is valid. Then, if the settlement completion data represented by the settlement completion code scanned by the checkout gate 300 or the completion identifier included in the settlement completion data is included in the exit management data DAB and the associated flag data indicates that the settlement completion data or the completion identifier is valid, passage through the checkout lane LA is permitted. Then, the flag data associated with the settlement completion data or the completion identifier is updated to a state indicating invalidity.

The transaction commodity may be registered at the POS terminal 200, and the checkout may be performed at the checkout gate 300.

Some or all of the functions implemented by the respective processors through information processing may be realized by hardware configured to execute information processing that is not based on a program, such as a logic circuit. Each of the above-described functions can also be realized by combining software control with hardware such as a logic circuit.

The program according to the present embodiment may be provided as being stored in an electronic device, or may be provided as not being stored in an electronic device. For the latter case, the program may be provided via a network, or may be provided as being stored in a storage medium. The storage medium is a non-transitory tangible medium. The storage medium is a computer-readable medium. The storage medium may be any medium that can store a program and can be read by a computer, such as a CD-ROM or a memory card, and the form thereof is not limited.

While certain embodiments have been described, these embodiments have been presented by way of example only, and are not intended to limit the scope of the inventions. Indeed, the novel embodiments described herein may be embodied in a variety of other forms; furthermore, various omissions, substitutions and modifications in the form of the embodiments described herein may be made without departing from the spirit of the inventions. The accompanying claims and their equivalents are intended to cover such forms or modifications as would fall within the scope and spirit of the inventions.

## Claims

1. A checkout system comprising:
a settlement unit configured to settle a payment for a transaction in a store;
an operation unit provided facing a checkout lane of the store and configured to perform a notification operation to make a person in a vicinity aware that a customer is permitted to exit the store via the checkout lane; and
a first control unit configured to control the operation unit to perform the notification operation in a predetermined first permission time period after completion of settlement by the settlement unit.

2. The checkout system according to claim 1, further comprising:
a first detection unit configured to detect an entry of the customer into the checkout lane; and
an alert unit configured to perform predetermined alert processing for issuing an alert in response to the entry being detected by the first detection unit outside the first permission time period.

3. The checkout system according to claim 1, further comprising:
an acquisition unit configured to acquire completion information indicating that the customer has completed settlement; and
a second control unit configured to control the operation unit to perform the notification operation in a predetermined second permission time period after the completion information is acquired by the acquisition unit.

4. The checkout system according to claim 3, further comprising:
a second detection unit configured to detect an exit of the customer via the checkout lane; and
an invalidation unit configured to invalidate the completion information for the settlement in a case where the exit is detected by the second detection unit in the first permission time period after completion of the settlement by the settlement unit,
wherein the second control unit does not cause the operation unit to perform the notification operation even if the completion information invalidated by the invalidation unit is acquired by the acquisition unit.

5. The checkout system according to claim 4,
wherein the invalidation unit is configured to invalidate the completion information acquired by the acquisition unit in a case where the exit is detected by the second detection unit in the second permission time period after the completion information is acquired by the acquisition unit.
